# EUROPEAN PATENT SPECIFICATION

(11) **EP 3 744 477 B1**
(45) Date of publication and mention of the grant of the patent: **03.09.2025**
(21) Application number: 19382431.5
(22) Date of filing: 29.05.2019
(51) Int. Cl.: B24B 55/02, B24B 7/24, B24B 55/06, B24B 41/053, B24B 55/04, B32B 38/10, B24B 9/10

(54) **DEVICE AND METHOD FOR REMOVING A LOW EMISSION LAYER FROM A GLASS PANEL**
VORRICHTUNG UND VERFAHREN ZUM ENTFERNEN EINER SCHICHT MIT GERINGER EMISSION VON EINER GLASSCHEIBE
DISPOSITIF ET PROCÉDÉ POUR ÉLIMINER UNE COUCHE DE FAIBLE ÉMISSION D'UN PANNEAU DE VERRE

(43) Date of publication of application: 02.12.2020
(73) Proprietor: Tur & Development SL, 44415 Teruel (ES)
(72) Inventor: Tomás Martin, Miguel, ES-44415 Rubielos De Mora (ES)
(74) Representative: Nederlandsch Octrooibureau

(56) References cited:
- EP-A1- 3 120 971
- WO-A1-2012/073626
- JP-A- 2018 176 362
- JP-A- H0 637 075
- JP-B2- 5 380 674
- JP-Y2- 2 519 946
- US-A1- 2006 068 683
- US-A1- 2014 273 750

## Description

### Field of the invention

The present invention relates to a device for removing a low emission layer and/or a protective layer of a glass panel wherein the stripping device comprises a stripping member, wherein the stripping member comprises a grinding wheel being rotatable arranged around a wheel rotation axis, and wherein the stripping device comprises a blowing device comprising a support element and a blowing element wherein the blowing element is mounted on the support element and arranged to blow a fluid or a gas and wherein the support element is arranged to keep the blowing element at a set distance from the grinding wheel such that the blowing element can direct a stream of the fluid or the gas towards the grinding wheel. The present invention also relates to a method for removing a low emission layer and/or a protective layer of a glass panel.

### Back ground of the invention

From the current state of the art, trimming devices, stripping devices, removing devices etcetera are known with heads capable of removing a low emission layer and/or protective layer from the surface of a glass panel, using a standardized devices such as a grinding wheel.

It should be noted that, during the removing operation of the low emission layer and/or protective layer by following the trajectory of the future cut, the grinding wheel may become warm due to the friction of the grinding wheel against the glass panel when removing the low emission layer and/or the protective layer. Furthermore, the grinding wheel may become dirty due to the the residues that are originated when removing the low emission layer and/or the protective layer from the surface of the glass panel.

The low emission layer are usually delicate and may be easily damaged. Therefore, one or more protective layers can be arranged covering the low emission layer in order to protect it from damage. However, these protective layers difficult the stripping process.

Depending on the material, it may be necessary to remove both the protective layer and the low emission layer.

From EP 3 120 971 A1 there is known a device for removing a low emission layer and/or a protective layer of a glass panel, comprising:- supporting means for supporting the glass panel, wherein, when the glass panel is positioned horizontally on the supporting means, an upper surface of the glass panel is provided with the low emission layer and/or the protective layer to be removed, a positioning bridge having a horizontally extending positioning portion arranged at a vertical distance from the upper surface of the glass panel and the supporting means, a stripping device configured to remove the low emission layer and/or the protective layer of the glass panel wherein the stripping device comprises a stripping member, wherein the stripping member comprises a grinding wheel being rotatable arranged around a wheel rotation axis, and wherein the stripping device comprises a blowing device comprising a support element and a blowing element wherein the blowing element is mounted on the support element and arranged to blow a gas and wherein the stripping device is arranged to move along the positioning portion in a horizontal direction, and over the upper surface of the glass panel, and the wheel rotation axis of the grinding wheel is parallel to the upper surface of the glass panel.

It is an object of the present invention to provide a device for removing a low emission layer and/or protective layer from a glass panel, which can overcome at least one of the above-mentioned drawbacks.

### Summary of the invention

An embodiment of the invention is directed to a device as defined by claim 1. Further embodiments are described by the dependent claims.

According to this, a stripping device for removing a low emission layer and/or a protective layer of a glass panel is provided, wherein the stripping device comprises a stripping member, wherein the stripping member comprises a grinding wheel being rotatable arranged around a wheel rotation axis, and wherein the stripping device comprises a blowing device comprising a support element and a blowing element wherein the blowing element is mounted on the support element and arranged to blow a fluid or a gas and wherein the support element is arranged to keep the blowing element at a set distance from the grinding wheel such that the blowing element can direct a stream of the fluid or the gas towards the grinding wheel.

This provides an advantage when removing the low emission layer and/or the protective layer from the surface of the glass panel because the blowing element allows to cool and/or clean the grinding wheel. As it has been explained, the grinding wheel may become warm due to the friction and/or dirty due to the the residues that are originated during the removing operation. The blowing element, by directing a stream of a fluid and/or a gas to the surface of the grinding wheel, allows to cool down and/or clean the surface of the grinding wheel. This device provides the possibility to have a continuous flow of glass panels mounted and ready for operation, because after performing the removing operation, the grinding wheel will be substantially cleaned and/or cooled down. This minimizes the amount of downtime between removing operations.

The blowing device may further comprise a conduct fluidly connected to the blowing element such that the fluid or the gas can pass through the conduct to the blowing element. This is an efficient way of proving the fluid or gas to the blowing element.

The conduct may be arranged through a grinding wheel orientation axis such that the grinding wheel can freely turn around the grinding wheel orientation axis such that the grinding wheel can orientate freely like a multi-turn axis. This allows for an efficient positioning of the grinding wheel as the blowing device does not interfere with the orientation movement of the grinding wheel.

The distance between the blowing element and the grinding wheel may be adjustable. This provides an advantageous blowing device because it allows to place the blowing element at a desired distance from the surface of the grinding wheel. Furthermore, it also allows to keep the desired distance constant even when the grinding wheel diameter reduces due to the grinding wheel surface wearing away when removing the low emission layer and/or the protective layer. As the diameter of the grinding wheel reduces, the distance between the blowing element and the grinding wheel increase. By adjusting the distance between the blowing element and the grinding wheel based on the change in diameter, it is possible to keep the distance substantially constant.

The support element may be movable mounted on the stripping device such that, by moving the support element, the distance between the blowing element and the grinding wheel can be adjusted. This provides an efficient way of adjusting the distance between the blowing element and the grinding wheel.

The blowing element may be arranged to adjust a force of the stream of the fluid or the gas such that by increasing or decreasing the force the blowing element is move away or towards the grinding wheel thereby allowing to adjust the distance between the blowing element and the grinding wheel. This is a very efficient way of adjusting said distance. For instance, the stripping device may comprises a sensor to detect changes in the diameter of the grinding wheel or changes in the distance between the blowing element and the grinding wheel, and processor may regulate the stream of fluid or gas based on information received from the sensor such that, when the diameter of the grinding wheel reduces, the force of the stream decreases allowing that the force of gravity moves the blowing element towards the grinding wheel for compensating the reduction in the diameter of the grinding wheel and thereby keeping the distance constant. The distance between the grinding wheel and the blowing element may be adjusted in any other suitable way. For instance, instead of moving the blowing element for adjusting the distance, the grinding wheel may be arranged to move towards the blowing element. A combination of movement of the grinding wheel and the blowing element may be also use for adjusting the distance between grinding wheel and the blowing element.

The support element may be movable mounted on the stripping device via a hinge such that the support element can rotate over the hinge for adjusting the distance between the grinding wheel and the blowing element. As the blowing element is mounted on the support element, by pivoting the supporting element around the hinge, it is possible to move the blowing element away or towards the grinding wheel, thereby easily adjusting the distance between the grinding wheel and the blowing element.

The support element may further comprise a regulating element arranged to contact the grinding wheel such that the distance between the grinding wheel and the blowing element is kept constant even when a diameter of the grinding wheel is reduced. In this way, when the diameter of the grinding wheel reduces, the regulating element which is in contact with the grinding wheel pulls from the support element which pivots over the hinge thereby bringing the blowing element in towards the grinding wheel and compensating for the diameter change such that the blowing element and the grinding wheel are kept at substantially the same distance.

Instead of the regulating element, any other way of moving and keeping the support element in the desired position such that the distance is adjusted may be used. For instance, a mechanism may raise or lower the support element and a lock element may lock the support element in the desired position. The lock element may be any suitable element that is able to fix the support element at a certain position. For instance, the support element may comprise a pin that fits in openings located at different heights of the stripping device such that each opening corresponds to a different position of the support element.

The regulating element may further be a wheel. This allows the support member to easily move when the diameter of the grinding wheel reduces.

The regulating element being a wheel may further be arranged to provide a measurement of a change in the grinding wheel diameter. As the wheel is in contact with the grinding wheel, the wheel can provide a measurement of the reduction of the diameter of the grinding wheel. For instance by providing the regulating wheel with a movement sensor. The amount of movement measured by the sensor may be a measurement of the amount of reduction in the grinding wheel diameter due to use.

The blowing device comprises a cooling device. In this manner, the cooling of the grinding wheel will be improved as the fluid or gas to be streamed towards the gridding wheel has been previously cooled by the cooling device.

### Brief description of the drawings

Further characteristics and advantages of the invention will become better apparent from the description of preferred embodiments of devices for removing a low emission layer and/or a protective layer of glass panels, illustrated by way of non-limiting example in the accompanying drawings, wherein:
Figure 1A and 1B show a view of a device mounted on a cutting table according to the invention;
Figures 2A, 3 and 4 show different perspectives of the device shown in figures 1A and 1B;
Figure 2B shows the device of figure 2A with a reduced grinding wheel due to use.
Figures 5A and 5B show detailed views of different parts of the device of figures 2, 3, and 4;
Figures 6A, 6B and 6C show different views of a blowing device according to the present invention;
Figures 7A and 7B show different views of a supporting member for a blowing device according to the present invention.

### Detailed description of the invention

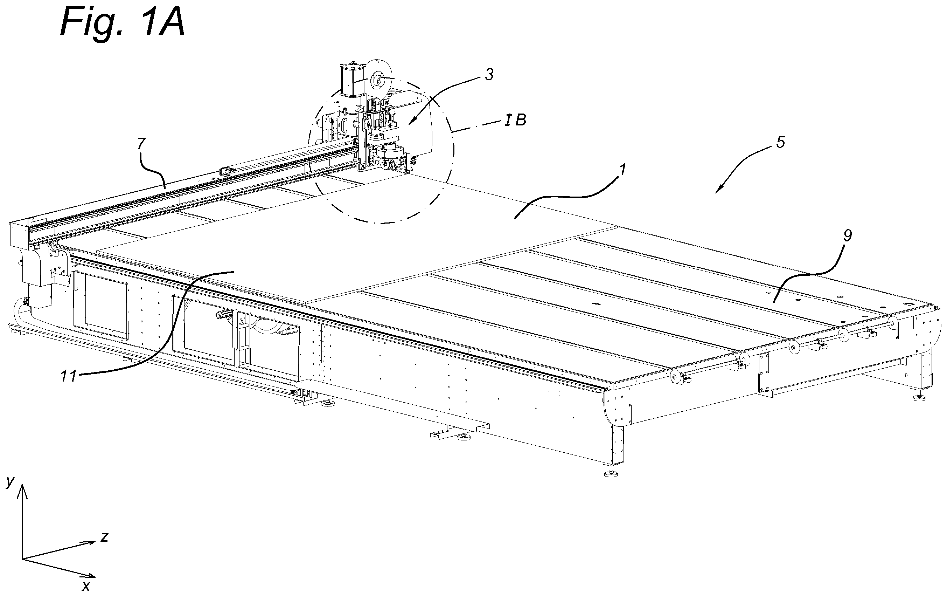

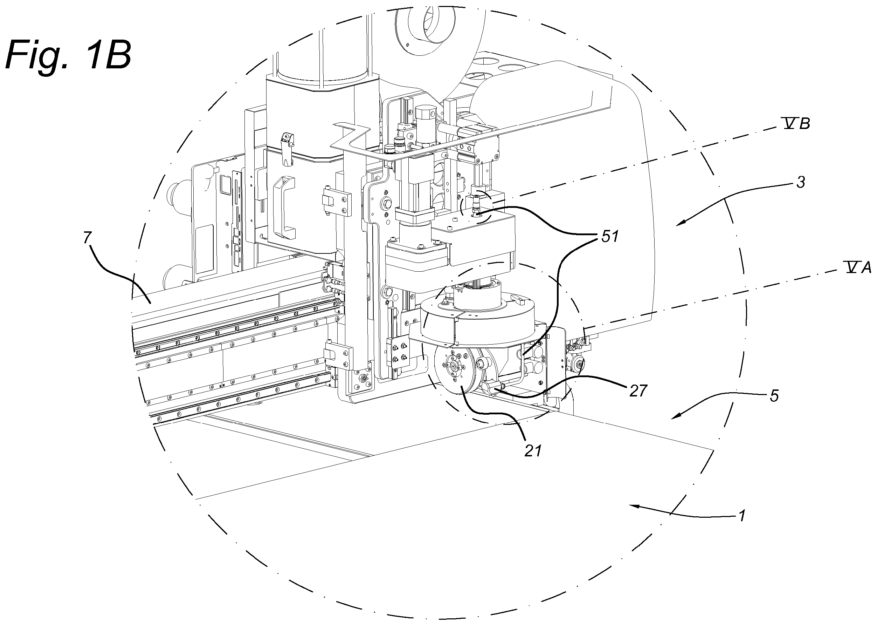

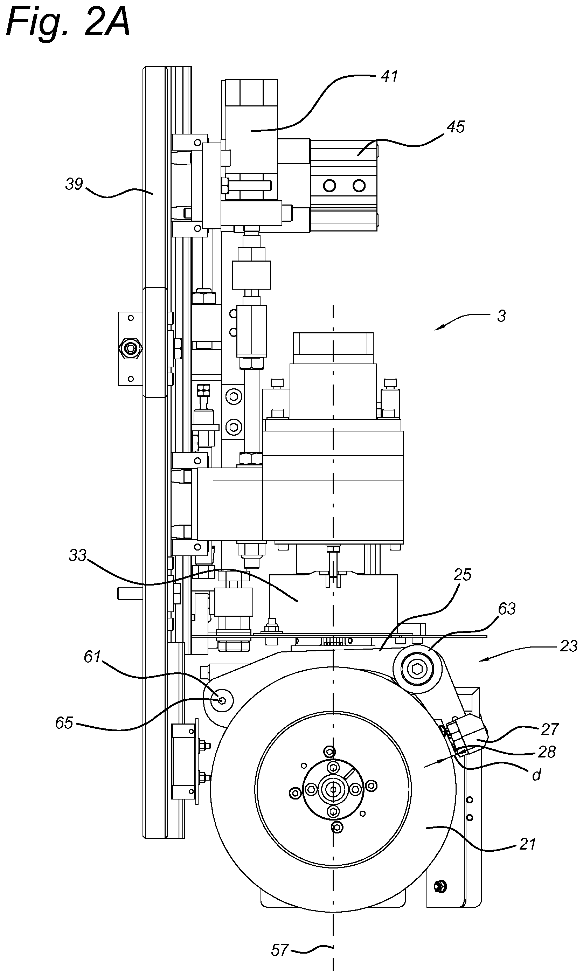

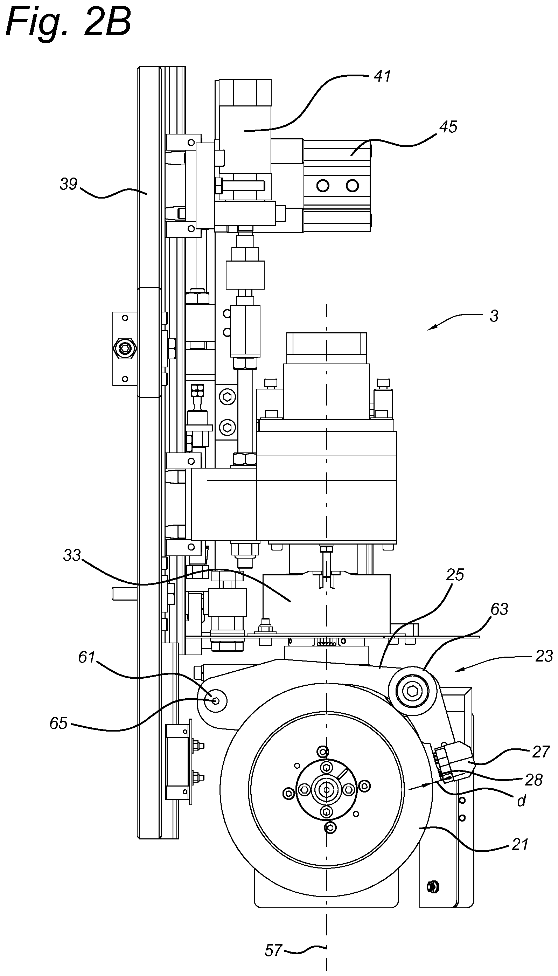

Figure 1A shows a glass panel 1 that is to be processed by a stripping device 3 according to the present invention. The stripping device 3 is preferably specifically designed for removing a low emission layer and/or a protective layer provided on the glass panel 1 for use on a cutting table 5. The stripping device 3, which can be best seen in figures 2, 3 & 4, is mounted in a positioning bridge 7 and it is installed in the cutting table 5. The cutting table 5 comprises a supporting means having a support surface 9 for supporting the glass panel 1 in a horizontal orientation as to be treated. The glass panel 1 comprises an upper surface 11 and a lower surface (not shown in figure 1) wherein the lower surface of the glass panel 1 is in contact with the support surface 9. The upper surface 11 of the glass panel 1 is positioned at a vertical distance from the positioning bridge 7 and the stripping device 3.

The stripping device 3 is mounted in the positioning bridge 7. The positioning bridge 7 has a horizontally portion (i.e. extending in a direction perpendicular to the plane defined by the X- and Z-axes) arranged at a vertical distance from the support surface 9, and also from the top surface 11 of the glass panel 1, when the glass panel 1 is in a position for performing the removing operation of the low emission layer and/or the protective layer provided onto the upper surface 11 of the glass panel 1. The stripping device 3 is moveable along the positioning bridge 7 in such a way that the stripping device 3 can be positioned at any position over the glass panel 1 and/or the support surface 9 of the cutting table 5.

The skilled person will appreciate that the glass panel 1 is a low emission glass panel that comprises a low emission layer, which can be in the form of a coating(s). The low emission layer has been developed to minimize the amount of ultraviolet and infrared light that can pass through glass without compromising the amount of visible light that is transmitted. The low emission layer is subject to oxidation when touched by a bear hand or in contact with other material. Moreover, this layer or coating(s) can be subject to damage if not handle with care. The skilled person will also appreciate that the glass panel 1 may also comprise a temporary protective layer. The protective layer may be a film and/or a coating. The temporary protective layer may have a full-coverage of the upper and lower surfaces of the glass panel 1. The temporary protective layer may be, for example, a plastic film ln the form of a low-adhesive recyclable film that protects the surface of the glass panel having the low emission film from mechanical and/or chemical damage often experience during handling operations. The temporary protective layer may be made of a suitable polymer material e.g. polyethylene, or may be made of any other suitable material. The glass panel may comprise any other number of layers for different purposes. An example of a glass panel comprising protective layers is, for instance, the glass panel Easy Pro ^{©} from Saint Gobain ^{©}. An example of a glass panel comprising a protective film is, for instance, the glass panel Guardian Glass ^{©}.

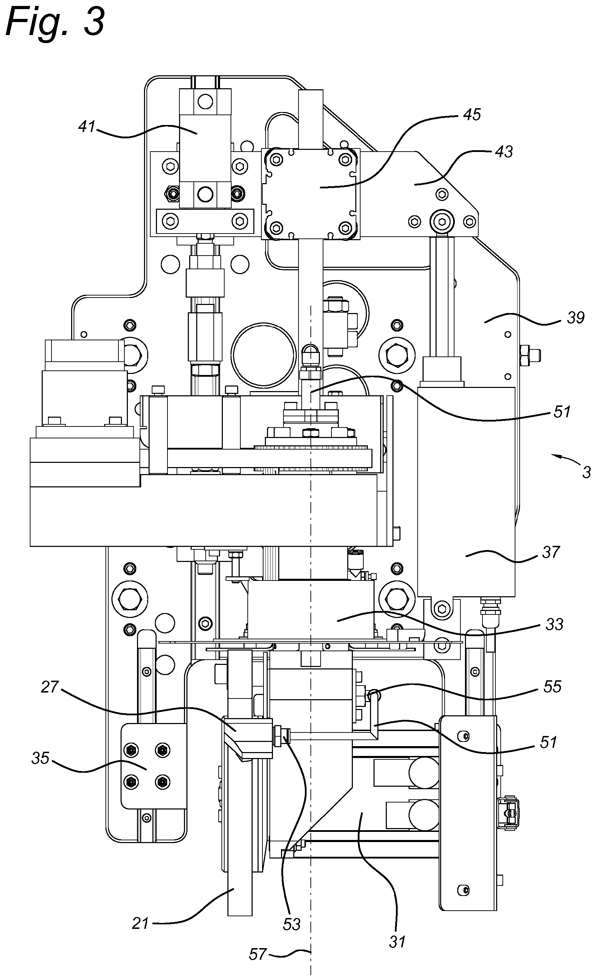

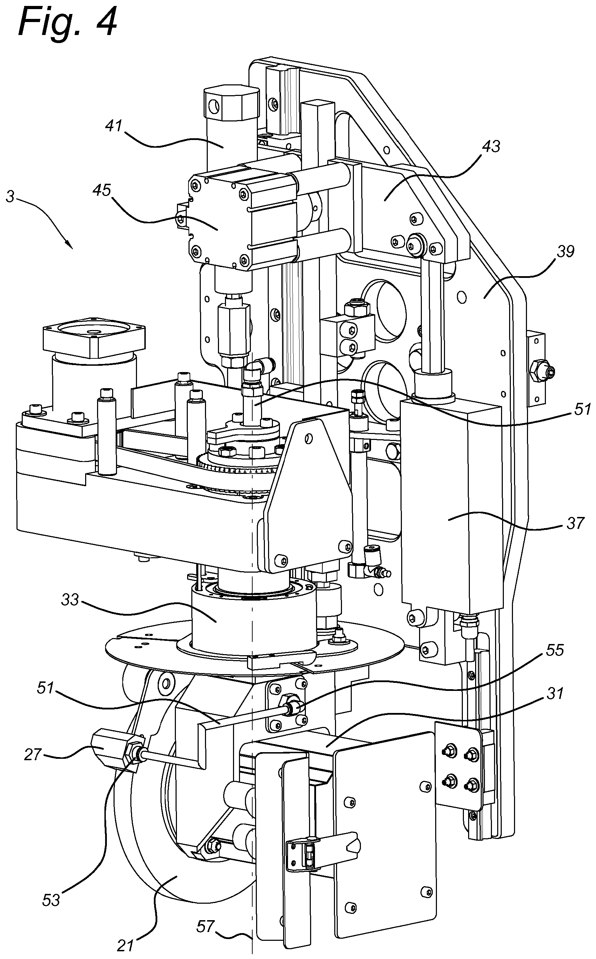

Figures 1B, 2, 3, and 4 show further details of the stripping device 3 of figure 1A. As can be seen more clearly in figures 1B, 2, 3 and 4, the stripping device 3 comprises a grinding wheel 21 and a blowing device 23. The blowing device 23 comprises a support element 25 and a blowing element 27. The blowing element 27 is arranged to blow a fluid or a gas (for instance air). The blowing element 27 is mounted on the support element 25 such that can direct a stream of the fluid or the gas towards the grinding wheel. The blowing element 27 may be a fan, or any other device suitable for generating a pressurize streaming of gas or fluid or a combination thereof and direct it to a desired location. The support element 25 is arranged to keep the blowing element 27 at a set distance d from the grinding wheel 21. The grinding wheel 21 is rotatable connected to a driving motor 31 shown in figures 3 and 4. The driving motor 31 provides rotational movement to the grinding wheel 21 in a parallel axis with respect to a stripping plane. Moreover, the grinding wheel 21 is connected to a bearing element 33 for moving the grinding wheel 21 around a perpendicular axis with respect to the stripping plane. As it can be seen in figures 1B, 2A, 2B, 3 and 4, the blowing element 27 is mounted on the support element 25 and orientated such that the blowing element 27 can direct a stream of gas or fluid to the outside surface of the grinding wheel 21. The blowing element 27 comprises an output 28 which in normal use is facing the surface of the grinding wheel 21. The blowing element 27 is arranged to blow a fluid or a gas through the output 28 such that a stream of fluid or gas can be directed to the grinding wheel 21.

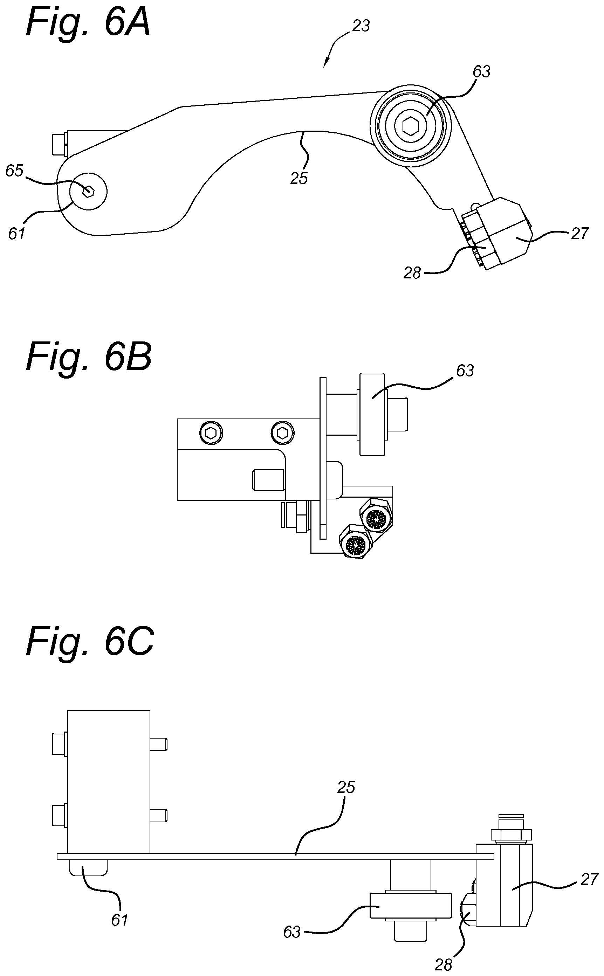

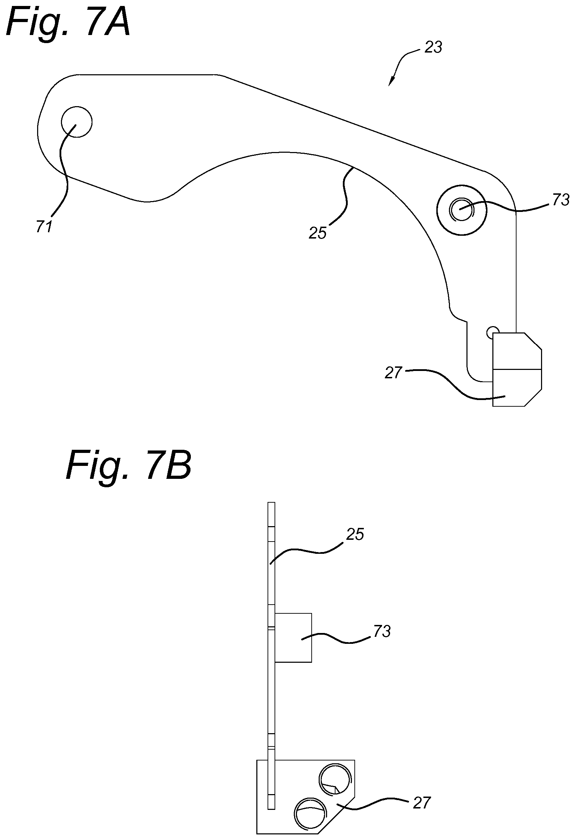

As it can be seen in figure 2A and 2B, the support element 25 is movable mounted on the stripping device 3 via a hinge 61 such that the support element 25 can rotate over the hinge 61. The support element 25 further comprises a regulating element 63 having the shape of a wheel. The regulating element 63 is arranged to stay in contact with the grinding wheel 21. Figures 6A-6C provide further views of the support element 25 comprising the blowing element 27, the hinge 61 and the regulating element 63. Figures 7A and 7B show the support element 25 without the blowing element 27, the hinge 61 and the regulating element 63. As it can be seen in Fig 7A, the support element 25 comprises an opening 71 through which a bolt 65 (shown in figures 2A, 2B and 6A) is introduced such that the support element 25 is attached to the stripping device 3 and is able to pivot around the bolt 65. As the blowing element 28 is mounted on the support element 25, by pivoting the supporting element 25 around the hinge 61, it is possible to move the blowing element 25 away or towards the grinding wheel 21, thereby easily adjusting the distance between the grinding wheel and the blowing element. As the support element 25 further comprises the regulating element 63 which is arranged to contact the grinding wheel, the distance between the grinding wheel 21 and the blowing element 27 is kept substantially constant even when a diameter of the grinding wheel 21 is reduced due to use of the grinding wheel. When the diameter of the grinding wheel reduces, the regulating element 63 descends towards the grinding wheel 21 and pulls from the support element 25 which pivots around the hinge 61 thereby bringing the blowing element 27 towards the grinding wheel 21 and compensating for the diameter change such that the blowing element 27 and the grinding wheel 21 are kept at substantially the same distance d. This can be seen in figure 2B, which shows the stripping device of figure 2B wherein the grinding wheel 21 has a reduced diameter compared to figure 2A because the grinding wheel 21 surface has been wasted away after being used for a certain time. Figure 2B also shows how the support element 25 has pivot around the hinge 61 from a first position shown in figure 2A to a second position shown in figure 2B such that the distance between the blowing element 27 and the grinding wheel 21 is kept substantially the same in both figures 2A and 2B. Although the regulating element 63 is shown as a wheel, it may have any other suitable shape or configuration that allows the support member 25 to move for compensating a diameter reduction of the grinding wheel. The desired distance d may depend on the blowing speed of the blowing element 27 or any other system parameter.

The regulating element 63 may be further arranged to provide a measurement of a change in the grinding wheel diameter. As the wheel is in contact with the grinding wheel 21, the regulating element 63 can provide a measurement of the reduction of the diameter of the grinding wheel 21. The regulating element 63 may comprise a movement sensor which can indicate the reduction in the grinding wheel diameter.

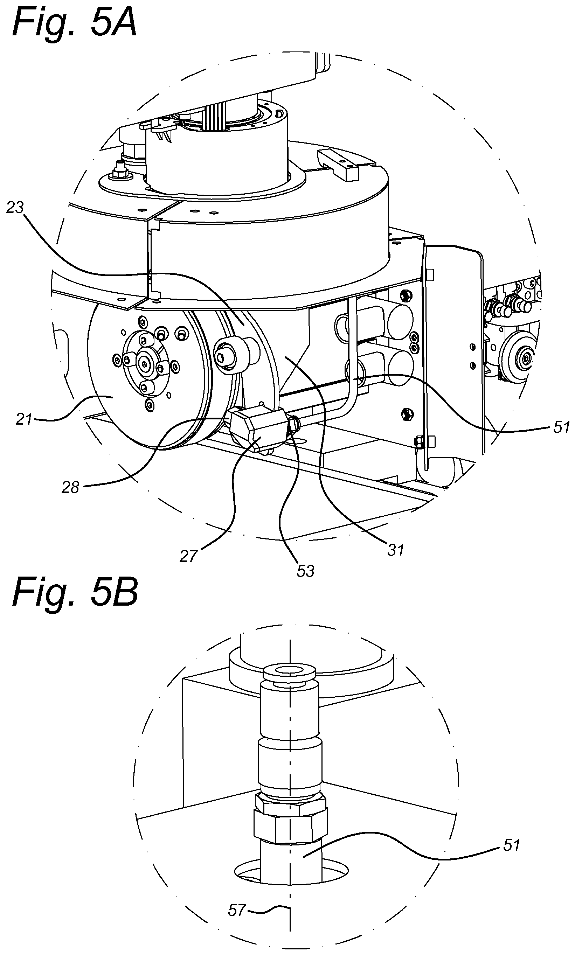

As shown in figures 1B, 3, 4, 5A and 5B, the blowing device 23 comprises a conduct 51 fluidly connected to the blowing element 27 such that a fluid or a gas or any combination thereby can pass through the conduct 51 to the blowing element 27 for providing a stream of the fluid or gas to the grinding wheel 21. The conduct 51 may be fluidly connected to the blowing element 27 at input 53. Part of the conduct 51 may partially surround the outside of the stripping device 3 before entering the inside of the stripping device 3 at a connection input 55. The conduct 51 may be arranged in any other suitable way. After entering the device 3 at the connection input 55, the conduct 51 may be further arranged extending along a grinding wheel orientation axis 57 (shown in figures 2A, 2B, 3, 4 and 5B) of the stripping device such that the grinding wheel 21 can turn for positioning around the wheel orientation axis 57 without interference of the conduct 51.

The blowing device 23 may further comprise a cooling device (not shown in the figures). The conduct 51 may pass through the cooling device thereby cooling the fluid or gas inside of the conduct 51.

Figure 3 shows also a transmission system 35, which is connected to the computer system, actuates the bearing element 33 that rotates the gridding wheel 21. The gridding wheel 21 may be made of an abrasive material having a fine or ultra-fine grain size of at least 100 µm in grain diameter. Upon usage of the gridding wheel 21, the material may be subject to some wear and tear, meaning this that the outer diameter of the gridding wheel 21 is progressively decreasing. Initially, the gridding wheel 21 may have an outer diameter of at least 100 mm. Due to the continuous decrease of the outer diameter of the gridding wheel 21, calibration of the height positioning of the gridding wheel 21 is necessary. This calibration is done by lowering the gridding wheel 21 up to a level wherein its outer periphery is in contact with the surface of the glass panel. Also due to this decrease of the outer diameter, the position of the blowing element 27 with respect to the grinding wheel 21 may need adjustment in order to keep a desired distance between the blowing element 27 and the grinding wheel 21.

The stripping device 1 further comprises a calibration system 37 for the stripping member 21 which can be best seen in figures 3 and 4. The stripping device 3 also comprises a main supporting element 39 wherein the different parts and/or elements forming the device 3 are mounted.

As shown, a height adjustment system 41 for the grinding wheel 21 is mounted on a supporting plate 43. The supporting plate provides a fix and steady supporting point to the calibration and adjustment systems 35, 37, 45. In this manner, a support structure for the calibration systems is provided, which can be accessed for maintenance and/or reparations of any of parts of the calibration systems 35, 37, 45 in an easy manner.

The operation of calibration of the gridding wheel 21 is done by firstly moving the stripping device 3 to a calibration area. The calibration area can be any position on top of the support surface of the cutting table. Once the stripping device 3 is at the position within the calibration area, the calibration system 37 for the gridding wheel 21 will move the gridding wheel 21 along the vertical axis Y until the lower point of the gridding wheel 21 is in contact with the support surface of the cutting table in a first contact position. This first contact position is stored in a memory, such that when a glass panel 1 is positioned in a substantially horizontal position on the support surface, the user can enter the thickness of the glass panel 1, previously known by the user, such that the height adjustment system 41 can move the gridding wheel 21 to a lower level where the lower point of the gridding wheel 21 contacts the surface of the glass panel 1.

The operation of the device according to the present invention will be explained here. During the operation of the system, and after the calibration of the gridding wheel 21, the removing operation of the low emission layer and/or the protective layer on glass panel 1 can be safely and efficiently done. Firstly, the glass panel 1 is positioned in the support surface 9 of the cutting table 5. The glass panel 1 has been previously measured and this data has been stored in a memory of the computer system controlling the stripping device 3. The user will enter data concerning the number of intersections and predetermined linear stripping lines to be performed on the surface of the glass panel 1, in order to perform the stripping operation on the glass panel 1.

The skilled person will appreciate that, this detail explanation on the operation of the stripping device 3, is meant for a glass panels having a number of perpendicular intersections between predetermined linear stripping lines, otherwise indicated.

Following, the positioning bridge 7 moves over the glass panel 1 along the axis X and Z. During this movement, the grinding wheel 21 is at a minimum vertical distance from the surface of the glass panel 1. In this manner, a substantial height adjustment prior to start the removing operation is avoided at a later stage of the stripping operation. Said distance is always at this stage a non-touching distance. Once the stripping device 3 is positioned at a predetermined starting point, the grinding wheel 21 is lowered up to a level wherein its lower point is in contact with the surface of the glass panel 1. In order to have a proper control of this movement and of the positioning of the grinding wheel 21, an analogue sensor (not illustrated) for accurate movement of the grinding wheel 21 is installed in the height adjustment system 41. The blowing device 23 may be blowing a fluid or a gas towards the grinding wheel 21 since the beginning of the stripping operation or may start upon detection that the grinding wheel is heated above a certain threshold. This might be detected by using a temperature sensor located at or near the grinding wheel. Furthermore, the blowing device may be activated or deactivated at any convenient moment.

It should be noted that the arrangement to determine the right order of performing the removing operation on a glass panel, depends on firstly performing the removing operation of the low emission layer and/or the protective layer along one of the predetermined linear stripping line, and subsequently, the device searches on a saved and stored matrix, in the computer system, which is composed of a number of predetermined linear stripping lines, where there is the closest intersection point between two predetermined linear stripping lines, in order to start the removing operation again along a new predetermined linear stripping line. Preferably, the closest intersection should be the intersection of the last predetermined linear stripping line wherein the stripping operation has been lastly performed.

The removing operation is performed in a similar manner, when the form to be striped is a non-rectangular form e.g. a triangle, the intersections between predetermined stripping lines are considered to be non-tangential between them. The starting point to perform the removing operation may be any point of the predetermined linear stripping lines.

The stripping device 3 may further comprise a cover element defining a stripping volume such that the grinding wheel 21 is arranged inside the stripping volume. The stripping device 3 may further comprise an aspiration device for creating a vacuum effect within the stripping volume and for collecting particles stripped off the low emission layer and/or the protective layer by the stripping action of the grinding wheel 21. The aspiration device may be provided with an aspiration tube being fluidly connected to the stripping volume for discharging the particles stripped off the low emission layer and/or the protective layer. The stripping device 3 may further comprise a collector member with a storage part for collecting parts of the low emission layer and/or the protective layer, and an air exhaust part for exhausting air.

EP3120971 A1 shows embodiments in which this invention can be applied. The stripping device 3 may comprise further a cover element as the one described and explained in EP3120971 A1, wherein the stripping member is arranged inside a stripping volume defined by the cover element, and wherein the stripping device 3 further comprises an aspiration device for creating a vacuum effect within said stripping volume and for collecting particles stripped off the low emission layer and/or the protective layer by the stripping action of the stripping member. The aspiration device 3 is provided with an aspiration tube being fluidly connected to the stripping volume for discharging the particles stripped off the low emission layer and/or the protective layer, a storage part for collecting parts of the low emission layer and/or the protective layer, and an air exhaust part for exhausting air.

Thus, the invention has been described by reference to the embodiments discussed above. It will be recognized that these embodiments are susceptible to various modifications and alternative forms well known to those of skill in the art without departing from the scope of the invention, as defined by the claims. Accordingly, although specific embodiments have been described, these are examples only and are not limiting upon the scope of the invention.

## Claims

1. A device for removing a low emission layer and/or a protective layer of a glass panel, comprising:
- supporting means for supporting the glass panel, wherein, when the glass panel is positioned horizontally on the supporting means, an upper surface of the glass panel is provided with the low emission layer and/or the protective layer to be removed,
- a positioning bridge having a horizontally extending positioning portion arranged at a vertical distance from the upper surface of the glass panel and the supporting means,
- a stripping device configured to remove the low emission layer and/or the protective layer of the glass panel wherein the stripping device (3) comprises a stripping member, wherein the stripping member comprises a grinding wheel (21) being rotatable arranged around a wheel rotation axis, and wherein the stripping device comprises a blowing device (23) comprising a support element (25) and a blowing element (27) wherein the blowing element (27) is mounted on the support element (25) and arranged to blow a fluid or a gas and wherein the support element (25) is arranged to keep the blowing element (27) at a distance from the grinding wheel (21) such that the blowing element (27) can direct a stream of the fluid or the gas towards the grinding wheel (21), wherein the blowing device (23) further comprises a cooling device arranged to cool the fluid or gas before is streamed towards the grinding wheel, and wherein the stripping device is arranged to move along the positioning portion in a horizontal direction, and over the upper surface of the glass panel, and the wheel rotation axis of the grinding wheel is parallel to the upper surface of the glass panel.

2. The device according to claim 1, wherein the blowing device (23) further comprises a conduct (51) fluidly connected to the blowing element (27) such that the fluid or the gas can pass through the conduct (51) to the blowing element (27).

3. The device according to claim 2, wherein the conduct (51) is arranged through a grinding wheel orientation axis (57) such that the grinding wheel (21) can freely turn around the grinding wheel orientation axis.

4. The device according to any of the preceding claims, wherein the distance between the blowing element (27) and the grinding wheel (21) can be adjusted.

5. The device according to claim 4 wherein the support element (25) is movable mounted on the stripping device such(3) that, by moving the support element (25), the distance between the blowing element (27) and the grinding wheel (21) can be adjusted.

6. The device according to claim 5 wherein the support element (25) is movable mounted on the stripping device (3) via a hinge (61) such that the support element (25) can rotate over the hinge (61) for adjusting the distance between the grinding wheel (21) and the blowing element (27).

7. The device according to claims 5 and 6, wherein the support element (25) comprises a regulating element (63) arranged to contact the grinding wheel (21) such that the distance between the grinding wheel (21) and the blowing element (27) is kept constant even when a diameter of the grinding wheel (21) is reduced.

8. The device according to claims 4, wherein the blowing element (27) is arranged to adjust a force of the stream of the fluid or the gas such that by increasing or decreasing the force the blowing element (27) is move away or towards the grinding wheel (21) thereby allowing to adjust the distance between the blowing element (27) and the grinding wheel (21).

9. The device according to claim 7, wherein the regulating element (63) is a wheel.

10. The device according to claim 7 wherein the regulating element (63) is arranged to provide a measurement of a change in the grinding wheel diameter.

11. The device according to any of the preceding claims, wherein the stripping device further comprises a cover element, the stripping member being arranged inside the stripping volume, and wherein the stripping device further comprises an aspiration device for creating a vacuum effect within the stripping volume and for collecting particles stripped off the low emission layer and/or the protective layer by the stripping action of the stripping member.

12. The device according to claim 11, wherein the aspiration device is provided with an aspiration tube being fluidly connected to the stripping volume for discharging the particles stripped off the low emission layer and/or the protective layer.

13. The device according to claim 12, wherein the aspiration device comprises a storage part for collecting parts of the low emission layer and/or the protective layer, and an air exhaust part for exhausting air.

## Patentansprüche

1. Vorrichtung zum Entfernen einer Schicht mit geringer Emission und/oder einer Schutzschicht von einer Glasscheibe, umfassend:
- Stützmittel, um die Glasscheibe zu stützen, wobei, wenn die Glasscheibe horizontal auf dem Stützmittel positioniert wird, eine obere Fläche der Glasscheibe mit der zu entfernenden Schicht mit geringer Emission und/oder der Schutzschicht versehen ist,
- eine Positionierungsbrücke mit einem horizontal verlaufenden Positionierungsabschnitt, der in einem vertikalen Abstand von der oberen Fläche der Glasscheibe und dem Stützmittel angeordnet ist,
- eine Abstreifvorrichtung, die so konfiguriert ist, dass sie die Schicht mit geringer Emission und/oder die Schutzschicht von der Glasscheibe entfernt, wobei die Abstreifvorrichtung (3) ein Abstreifelement umfasst, wobei das Abstreifelement ein Schleifrad (21) umfasst, das drehbar um eine Raddrehachse angeordnet ist, und wobei die Abstreifvorrichtung eine Blasvorrichtung (23) umfasst, die ein Trägerelement (25) und ein Blaselement (27) umfasst, wobei das Blaselement (27) auf dem Trägerelement (25) montiert ist und so angeordnet ist, dass es eine Flüssigkeit oder ein Gas bläst, und wobei das Trägerelement (25) so angeordnet ist, dass es das Blaselement (27) in einem Abstand von dem Schleifrad (21) hält, so dass das Blaselement (27) einen Strom der Flüssigkeit oder des Gases auf das Schleifrad (21) richten kann, wobei die Blasvorrichtung (23) ferner eine Kühlvorrichtung umfasst, die so angeordnet ist, dass sie die Flüssigkeit oder das Gas kühlt, bevor es zum Schleifrad geströmt wird, und wobei die Abstreifvorrichtung so angeordnet ist, dass sie sich entlang des Positionierungsabschnitts in einer horizontalen Richtung und über die obere Fläche der Glasscheibe bewegt, und die Raddrehachse des Schleifrades parallel zur oberen Fläche der Glasscheibe läuft.

2. Vorrichtung nach Anspruch 1, wobei die Blasvorrichtung (23) ferner eine Leitung (51) umfasst, die in Fluidverbindung mit dem Blaselement (27) steht, so dass die Flüssigkeit oder das Gas durch die Leitung (51) zum Blaselement (27) gelangen kann.

3. Vorrichtung nach Anspruch 2, wobei die Leitung (51) durch eine Orientierungsachse des Schleifrads (57) angeordnet ist, so dass sich das Schleifrad (21) frei um die Orientierungsachse des Schleifrads drehen kann.

4. Vorrichtung nach einem der vorhergehenden Ansprüche, wobei der Abstand zwischen dem Blaselement (27) und dem Schleifrad (21) eingestellt werden kann.

5. Vorrichtung nach Anspruch 4, wobei das Trägerelement (25) derart beweglich auf der Abstreifvorrichtung (3) montiert ist, dass durch Bewegen des Trägerelements (25) der Abstand zwischen dem Blaselement (27) und dem Schleifrad (21) eingestellt werden kann.

6. Vorrichtung nach Anspruch 5, wobei das Trägerelement (25) über ein Scharnier (61) derart beweglich auf der Abstreifvorrichtung (3) montiert ist, dass sich das Trägerelement (25) über das Scharnier (61) drehen kann, um den Abstand zwischen dem Schleifrad (21) und dem Blaselement (27) einzustellen.

7. Vorrichtung nach den Ansprüchen 5 und 6, wobei das Trägerelement (25) ein Regulierelement (63) umfasst, das so angeordnet ist, dass es das Schleifrad (21) berührt, so dass der Abstand zwischen dem Schleifrad (21) und dem Blaselement (27) konstant gehalten wird, selbst wenn ein Durchmesser des Schleifrads (21) verringert wird.

8. Vorrichtung nach den Ansprüchen 4, wobei das Blaselement (27) so angeordnet ist, dass es eine Kraft des Flüssigkeits- oder Gasstroms so einstellt, dass durch Erhöhen oder Verringern der Kraft das Blaselement (27) von dem Schleifrad (21) weg- oder zu diesem hinbewegt wird, wodurch der Abstand zwischen dem Blaselement (27) und dem Schleifrad (21) eingestellt werden kann.

9. Vorrichtung nach Anspruch 7, wobei das Regulierelement (63) ein Rad Ist.

10. Vorrichtung nach Anspruch 7, wobei das Regulierelement (63) so angeordnet ist, dass es eine Messung einer Änderung des Durchmessers des Schleifrads ermöglicht.

11. Vorrichtung nach einem der vorhergehenden Ansprüche, wobei die Abstreifvorrichtung ferner ein Abdeckelement umfasst, wobei das Abstreifelement innerhalb des Abstreifvolumens angeordnet ist, und wobei die Abstreifvorrichtung ferner eine Absaugvorrichtung zum Erzeugen eines Vakuumeffekts innerhalb des Abstreifvolumens und zum Sammeln von Partikeln umfasst, die durch die Abstreifwirkung des Abstreifelements von der Schicht mit geringer Emission und/oder der Schutzschicht abgestreift wurden.

12. Vorrichtung nach Anspruch 11, wobei die Absaugvorrichtung mit einem Absaugrohr versehen ist, das in Fluidverbindung mit dem Abstreifvolumen steht, um die von der Schicht mit geringer Emission und/oder der Schutzschicht abgestreiften Partikel abzuführen.

13. Vorrichtung nach Anspruch 12, wobei die Absaugvorrichtung einen Speicherteil zum Sammeln von Teilen der Schicht mit geringer Emission und/oder der Schutzschicht und einen Luftabfuhrteil zum Abführen von Luft umfasst.

## Revendications

1. Dispositif pour éliminer une couche de faible émission et/ou une couche protectrice d'un panneau de verre, comprenant :
- des moyens de support pour supporter le panneau de verre, où, lorsque le panneau de verre est positionné horizontalement sur les moyens de support, une surface supérieure du panneau de verre est pourvue de la couche de faible émission et/ou de la couche protectrice à éliminer,
- un pont de positionnement ayant une partie de positionnement s'étendant horizontalement, disposée à une distance verticale de la surface supérieure du panneau de verre et des moyens de support,
- un dispositif de décapage configuré pour éliminer la couche de faible émission et/ou la couche protectrice du panneau de verre, où le dispositif de décapage (3) comprend un élément de décapage, où l'élément de décapage comprend une meule (21) pouvant tourner, disposée autour d'un axe de rotation de la roue, et où le dispositif de décapage comprend un dispositif de soufflage (23) comprenant un élément de support (25) et un élément de soufflage (27), où l'élément de soufflage (27) est monté sur l'élément de support (25) et disposé pour souffler un fluide ou un gaz, et où l'élément de support (25) est disposé pour maintenir l'élément de soufflage (27) à une distance de la meule (21) de telle sorte que l'élément de soufflage (27) puisse diriger un flux du fluide ou du gaz vers la meule (21), où le dispositif de soufflage (23) comprend en outre un dispositif de refroidissement disposé pour refroidir le fluide ou le gaz avant qu'il ne soit dirigé vers la meule, et où le dispositif de décapage est disposé pour se déplacer le long de la partie de positionnement dans une direction horizontale, et au-dessus de la surface supérieure du panneau de verre, et l'axe de rotation de la roue de la meule est parallèle à la surface supérieure du panneau de verre.

2. Dispositif selon la revendication 1, où le dispositif de soufflage (23) comprend en outre un conduit (51) relié de manière fluide à l'élément de soufflage (27) de telle sorte que le fluide ou le gaz puisse passer à travers le conduit (51) vers l'élément de soufflage (27).

3. Dispositif selon la revendication 2, où le conduit (51) est disposé à travers un axe d'orientation de la meule (57) de telle sorte que la meule (21) puisse tourner librement autour de l'axe d'orientation de la meule.

4. Dispositif selon l'une quelconque des revendications précédentes, où la distance entre l'élément de soufflage (27) et la meule (21) peut être ajustée.

5. Dispositif selon la revendication 4, où l'élément de support (25) est monté de manière mobile sur le dispositif de décapage (3) de telle sorte que, en déplaçant l'élément de support (25), la distance entre l'élément de soufflage (27) et la meule (21) puisse être ajustée.

6. Dispositif selon la revendication 5, où l'élément de support (25) est monté de manière mobile sur le dispositif de décapage (3) via une charnière (61) de telle sorte que l'élément de support (25) peut pivoter sur la charnière (61) pour ajuster la distance entre la meule (21) et l'élément de soufflage (27).

7. Dispositif selon les revendications 5 et 6,
où l'élément de support (25) comprend un élément de réglage (63) disposé pour entrer en contact avec la meule (21) de telle sorte que la distance entre la meule (21) et l'élément de soufflage (27) soit maintenue constante même lorsque le diamètre de la meule (21) est réduit.

8. Dispositif selon la revendication 4, où l'élément de soufflage (27) est disposé pour ajuster la force du flux du fluide ou du gaz de telle sorte qu'en augmentant ou en diminuant la force, l'élément de soufflage (27) s'éloigne ou se rapproche de la meule (21), permettant ainsi d'ajuster la distance entre l'élément de soufflage (27) et la meule (21).

9. Dispositif selon la revendication 7, où l'élément de réglage (63) est une roue.

10. Dispositif selon la revendication 7, où l'élément de réglage (63) est disposé pour fournir une mesure d'un changement dans le diamètre de la meule.

11. Dispositif selon l'une quelconque des revendications précédentes, où le dispositif de décapage comprend en outre un élément de couverture, l'élément de décapage étant disposé à l'intérieur du volume de décapage, et où le dispositif de décapage comprend en outre un dispositif d'aspiration pour créer un effet de vide à l'intérieur du volume de décapage et pour collecter des particules décapées de la couche de faible émission et/ou de la couche protectrice par l'action de décapage de l'élément de décapage.

12. Dispositif selon la revendication 11, où le dispositif d'aspiration est pourvu d'un tube d'aspiration relié de manière fluide au volume de décapage pour évacuer les particules décapées de la couche de faible émission et/ou de la couche protectrice.

13. Dispositif selon la revendication 12, où le dispositif d'aspiration comprend une partie de stockage pour collecter des parties de la couche de faible émission et/ou de la couche protectrice, et une partie d'évacuation d'air pour évacuer l'air.
